# EUROPÄISCHE PATENTSCHRIFT

(11) **EP 2 787 182 B1**
(45) Veröffentlichungstag und Bekanntmachung des Hinweises auf die Patenterteilung: **06.06.2018**
(21) Anmeldenummer: 13161903.3
(22) Anmeldetag: 02.04.2013
(51) Int. Cl.: F04D 29/56, F04D 29/16, F04D 19/00, F04D 29/54, F01D 17/16, F01D 11/10, B23P 15/04, B22F 5/04

(54) **Leitschaufel für eine Strömungsmaschine, Leitschaufelgitter und Verfahren zur Herstellung einer Leitschaufel oder eines Leitschaufelgitters**
Guide blade for a fluid flow engine, guide blade grid and method for the production of a guide blade or a guide blade grid
Aube directrice pour une turbomachine, grille d'aube directrice et procédé de fabrication d'une aube directrice ou d'une grille d'aube directrice

(43) Veröffentlichungstag der Anmeldung: 08.10.2014
(73) Patentinhaber: MTU Aero Engines AG, 80995 München (DE)
(72) Erfinder: Zotz, Georg, 85778 Haimhausen (DE)

(56) Entgegenhaltungen:
- EP-A1- 2 366 476
- EP-A2- 2 037 083
- EP-A2- 2 216 508
- DE-A1-102009 053 247
- DE-A1-102010 026 139
- KR-A- 20110 136 296
- US-A- 4 193 738
- US-A1- 2010 180 592

## Beschreibung

Die Erfindung betrifft eine Leitschaufel für eine Strömungsmaschine, insbesondere für einen Verdichter oder eine Turbine eines Flugzeugtriebwerks, gemäß den Merkmalen des Oberbegriffs des Patentanspruchs 1. Die Erfindung betrifft weiterhin ein Leitschaufelgitter sowie ein Verfahren zur Herstellung einer Leitschaufel oder eines Leitschaufelgitters.

Derartige Leitschaufeln für Strömungsmaschinen sind bereits aus dem Stand der Technik bekannt. Dabei sind die Leitschaufeln in einem Verdichter oder einer Turbine der Strömungsmaschine, insbesondere einer thermischen Gasturbine, feststehend gegenüber einem Gehäuse der Strömungsmaschine ausgebildet. Die Strömungsmaschine umfasst weiterhin mehrere rotierende Laufschaufeln, die mindestens einem Rotor zugeordnet sind und gegenüber den feststehenden Leitschaufeln sowie dem feststehenden Gehäuse rotieren. Des Weiteren sind die Leitschaufeln an einen radial innenliegenden statischen Innenring gekoppelt. Zur Erhöhung des Wirkungsgrads der Strömungsmaschine können die gegenüber den Laufschaufeln feststehenden Leitschaufeln um eine radiale Achse verstellbar bzw. schwenkbar ausgebildet sein. Dabei ergibt sich jeweils ein so genannter Hinterkantenspalt zwischen der Innenseite des Gehäuses und einer radial außenliegenden oberen Hinterkante der Leitschaufel bzw. zwischen dem Innenring und der radial innenliegenden unteren Hinterkante der Leitschaufel. Die Größe des Hinterkantenspalts ist dabei abhängig von der Winkelstellung der Leitschaufel. Je größer der Hinterkantenspalt ausgebildet ist, desto negativer wirkt er sich auf den Wirkungsgrad und die Pumpgrenze der Strömungsmaschine aus. Dies ergibt sich insbesondere aus der Tatsache, dass die Hinterkanten von dem Arbeitsmedium der Strömungsmaschine, insbesondere von Luft umströmt werden. Aus der US 4 193 738 A, der EP 2 216 508 A2 und der EP 2 037 083 A2 sind Leitschaufeln für Strömungsmaschinen gemäß den Merkmalen des Oberbegriffs des Patentanspruchs 1 bekannt. Die DE 10 2010 026139 A1 sowie die DE 10 2009 053247 A1 beschreiben Verfahren zur generativen Herstellung von Bauteilen einer Strömungsmaschine.

Aufgabe der vorliegenden Erfindung ist es, eine Leitschaufel oder ein Leitgitter der eingangs genannten Art zu schaffen, welche einen erhöhten Wirkungsgrad einer Strömungsmaschine gewährleisten. Eine weitere Aufgabe der Erfindung ist es, eine entsprechende Leitschaufel oder eine entsprechendes Leitschaufelgitter formgenau und kostengünstig herzustellen.

Die Aufgaben werden erfindungsgemäß durch eine Leitschaufel mit den Merkmalen des Patentanspruchs 1, ein Leitschaufelgitter mit den Merkmalen des Patentanspruchs 6 sowie ein Verfahren mit den Merkmalen des Patentanspruchs 7 gelöst. Vorteilhafte Ausgestaltungen der Erfindung sind in den jeweiligen Unteransprüchen angegeben, wobei vorteilhafte Ausgestaltungen der Leitschaufel als vorteilhafte Ausgestaltungen des erfindungsgemäßen Leitschaufelgitters anzusehen sind.

Bei einer erfindungsgemäßen Leitschaufel für eine Strömungsmaschine, insbesondere für einen Verdichter oder eine Turbine eines Flugzeugtriebwerks ist die Leitschaufel axial verschwenkbar mit einer radial außenliegenden strömungsbegrenzenden Wand und mit einem radial innenliegenden Innenring der Strömungsmaschine gekoppelt, wobei zwischen einer oberen Hinterkante der Leitschaufel und der strömungsbegrenzenden Wand und/oder zwischen einer unteren Hinterkante der Leitschaufel und dem Innenring ein Hinterkantenspalt ausgebildet ist. Dabei weist die obere Hinterkante und/oder die untere Hinterkante der Leitschaufel mindestens eine Luftaustrittsöffnung für einen Luftaustritt zur Ausbildung eines Luftvorhangs zur zumindest teilweisen Abdichtung des Hinterkantenspalts im Bereich der oberen Hinterkante und/oder des Hinterkantenspalts im Bereich der unteren Hinterkante auf. Durch die Ausbildung des Luftvorhangs in den Hinterkantenspalten zur radial ausliegenden strömungsbegrenzenden Wand, welche insbesondere einem Gehäuse der Strömungsmaschine zugeordnet werden kann, und/oder zum Innenring der Strömungsmaschine ergibt sich eine Abdichtung der Hinterkantenspalte, die zu einem erhöhten Wirkungsgrad der Strömungsmaschine führt. Die Hinterkantenspalte können nicht mehr von Luft umströmt werden. Die Anwahl und Ausgestaltung der Luftaustrittsöffnungen kann dabei derart gewählt werden, dass der oder die Hinterkantenspalte über ihre gesamten Verstellbereiche der Leitschaufel abgedichtet werden.

Zudem ist die Luftaustrittsöffnung über mindestens einen Kanal mit mindestens einer Lufteintrittsöffnung auf einer Schaufeloberfläche eines Schaufelblatts der Leitschaufel luftleitend verbunden. Dabei kann die Lufteintrittsöffnung auf der Druckseite der Leitschaufel ausgebildet sein. Dadurch ist immer ein genügend großes Luftvolumen zur Ausbildung des Luftvorhangs zur Abdichtung der Hinterkantenspalte vorhanden. Der Ausdruck "Luft" steht dabei für jedes mögliche verwendbare gasförmige Arbeitsmedium der Strömungsmaschine.

In einer weiteren vorteilhaften Ausgestaltung der erfindungsgemäßen Leitschaufel ist im Bereich der Lufteintrittsöffnung vor der Herstellung der Lufteintrittsöffnung mindestens eine lokale Aufdickung des Schaufelblatts der Leitschaufel ausgebildet. Dadurch ist es vorteilhafterweise möglich, nahezu jede Position für die Lufteintrittsöffnung am Schaufelblatt zu verwenden. Insbesondere kann dadurch die Lufteintrittsöffnung aerodynamisch optimiert positioniert werden.

In einer weiteren vorteilhaften Ausgestaltung der erfindungsgemäßen Leitschaufel ist im Bereich der Lufteintrittsöffnung mindestens ein Luftleitblech am Schaufelblatt angeordnet. Dadurch ist es möglich, gezielt Luftströme in die Lufteintrittsöffnung zu leiten.

In weiteren vorteilhaften Ausgestaltungen der erfindungsgemäßen Leitschaufel ist die Luftaustrittsöffnung trichter- oder spaltenförmig ausgebildet. Aber auch andere Ausgestaltungsformen sind denkbar. Durch die trichterförmige Ausgestaltung der Luftaustrittsöffnung ist gewährleistet, dass immer ein genügend großes Luftvolumen zur Verfügung steht. Die spaltförmige Ausgestaltung der Luftaustrittsöffnung kann zu einer exakten Steuerung der Ausgestaltung der sich bildenden Luftwand verwendet werden. Insbesondere können die Längsachsen mehrerer hintereinander angeordneter Luftaustrittsöffnungen ungefähr parallel zum Schaufelquerschnitt der Leitschaufel verlaufen. Dadurch ist gewährleistet, dass sich über den gesamten Hinterkantenspalt die entsprechende Luftwand ausbildet.

Die Erfindung betrifft weiterhin ein Leitschaufelgitter einer Strömungsmaschine, insbesondere eines Verdichters oder einer Turbine eines Flugtriebwerks, umfassend mindestens zwei Leitschaufeln nach einem der vorhergehenden Ansprüche. Die Ausgestaltung von derartigen erfindungsgemäßen verstellbaren Leitgittern gewährleistet einen erhöhten Wirkungsgrad der entsprechenden Strömungsmaschine.

Die Erfindung betrifft weiterhin ein Verfahren zur Herstellung einer Leitschaufel oder eines Leitschaufelgitters wie im Vorhergehenden beschrieben, wobei die Leitschaufel oder das Leitschaufelgitter mittels eines generativen Herstellungsverfahrens hergestellt werden. Dabei kann es sich bei dem generativen Herstellungsverfahren um ein selektives Laserschmelzverfahren oder ein selektives Lasersinterverfahren handeln. Auch andere generative Herstellungsverfahren sind denkbar. Durch die Verwendung von generativen Fertigungsverfahren ist ein formgenaues und kostengünstiges Herstellen der Leitschaufel oder der entsprechenden Leitschaufelgitter möglich. Allerdings können zur Herstellung der erfindungsgemäßen Leitschaufel oder des erfindungsgemäßen Leitschaufelgitters natürlich auch konventionelle Herstellungsverfahren, wie z. B. Gießverfahren verwendet werden.

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigt
- Figur 1: eine schematische Darstellung eines Teilbereichs einer erfindungsgemäßen Leitschaufel; und
- Figur 2: eine schematisch dargestellte Aufsicht auf die erfindungsgemäße Leitschaufel gemäß Figur 1.

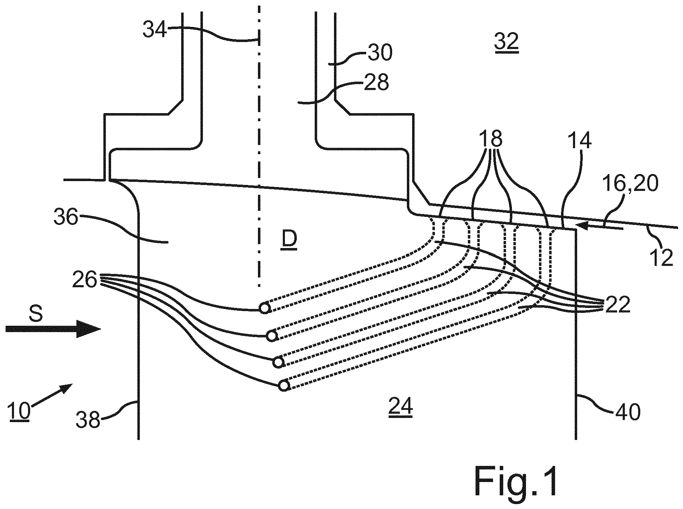

Die in Figur 1 teilweise dargestellte Leitschaufel 10 ist mit ihrem radial äußeren Ende mit einer strömungsbegrenzenden Wand 12 axial verschwenkbar gekoppelt. Die Wand 14 ist in dem dargestellten Ausführungsbeispiel ein Gehäuse 32 eines Axialverdichters einer Strömungsmaschine, insbesondere eines Flugzeugtriebwerks. Man erkennt, dass die Leitschaufel 10 an einer entsprechenden Innenseite der strömungsbegrenzenden Gehäusewand 12 angeordnet ist. Des Weiteren erkennt man, dass die Leitschaufel 10 eine Anströmkante 38 und eine Austrittskante 40 aufweist, die in einem entsprechenden Strömungsvolumen mit einer Strömungsrichtung S der Strömungsmaschine ausgerichtet sind. Des Weiteren ist die Leitschaufel 10 mit einem radial innenliegenden Innenring der Strömungsmaschine gekoppelt (nicht dargestellt). Zwischen einer oberen Hinterkante 14 der Leitschaufel 10 und der strömungsbegrenzenden Wand 12 ist ein Hinterkantenspalt 16 ausgebildet. Entsprechendes gilt für die nicht dargestellte untere Hinterkante der Leitschaufel 10 und dem Innenring der Strömungsmaschine. Man erkennt, dass die obere Hinterkante 14 mehrere Luftaustrittsöffnungen 18 für einen Luftaustritt zur Ausbildung eines Luftvorhangs 20 zur Abdichtung des Hinterkantenspalts 16 im Bereich der oberen Hinterkante 14 aufweist. Die Luftaustrittsöffnungen 18 sind dabei trichterförmig ausgebildet. Zudem sind die jeweiligen Luftaustrittsöffnungen 18 über jeweils einen Kanal 22, die innerhalb eines Schaufelblatts 36 der Leitschaufel 10 ausgebildet sind, mit jeweils einer Lufteintrittsöffnung 26 auf einer Schaufeloberfläche 24 des Schaufelblatts 36 luftleitend verbunden. Des Weiteren wird deutlich, dass die Lufteintrittsöffnungen 26 auf der Druckseite D der Leitschaufel 10 ausgebildet sind.

Die Leitschaufel 10 ist um eine Drehachse 34 verschwenkbar im Gehäuse 32 angeordnet. Dabei ragt ein Drehzapfen 28 in eine entsprechende Ausnehmung 30 des Gehäuses 32 und ist in diesem verschwenkbar gelagert.

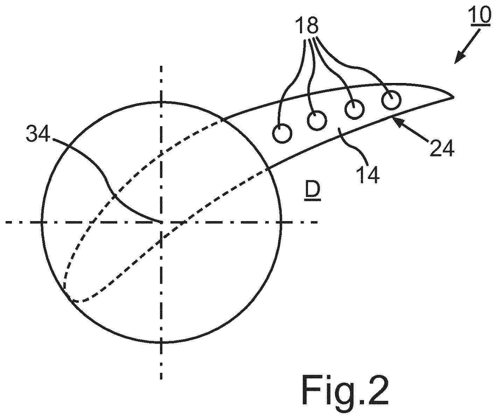

Figur 2 zeigt eine schematisch dargestellte Aussicht auf die Laufleitschaufel 10 gemäß Figur 1. Man erkennt, dass auf der oberen Hinterkante 14 die Luftaustrittsöffnungen 18 angeordnet sind. Die in dieser Darstellung nicht gezeigten Lufteintrittsöffnungen sind an der Schaufeloberfläche 24 auf der Druckseite der Leitschaufel 10 ausgebildet. Die Leitschaufel 10 ist über die Drehachse 34 verschwenkbar gelagert.

Die in Figur 1 und 2 gezeigte Leitschaufel 10 kann mit mehreren weiteren Leitschaufeln zu einem verstellbaren Leitgitter verbunden werden. Neben der Möglichkeit der Herstellung des Leitgitters oder der Leitschaufel 10 mittels konventioneller Gießverfahren besteht die Möglichkeit, die Leitschaufel 10 oder ein entsprechendes Leitschaufelgitter bestehend aus mehreren Leitschaufeln 10 mittels eines generativen Herstellungsverfahrens, insbesondere eines selektiven Laserschmelz- oder selektiven Lasersinterverfahrens herzustellen. Dabei wird vorzugsweise ein zweistufiger Prozess wiederholend ausgeführt, wobei in einem ersten Schritt des zweistufigen Prozesses ein gleichmäßiges Pulverbett aus einem Metallpulver bereitgestellt wird. In einem zweiten Schritt wird auf Basis von aus einem dreidimensionalen CAD-Modell erzeugten Schichten das Metallpulver des Pulverbetts selektiv aufgeschweißt und damit verfestigt. Durch die wiederholende Ausführung dieses zweistufigen Prozesses wird die herzustellende Leitschaufel 10 oder das entsprechende Leitschaufelgitter schichtweise und damit sukzessive aufgebaut. Das in dem ersten Schritt bereitgestellte Metallpulver besteht insbesondere aus einer Nickel-Basis-Legierung oder einer Titan-Basis-Legierung.

## Patentansprüche

1. Leitschaufel für eine Strömungsmaschine, insbesondere für einen Verdichter oder eine Turbine eines Flugzeugtriebwerks, wobei die Leitschaufel (10) axial verschwenkbar mit einer radial außen liegenden strömungsbegrenzenden Wand (12) und mit einem radial innen liegenden Innenring der Strömungsmaschine gekoppelt ist und zwischen einer oberen Hinterkante (14) der Leitschaufel (10) und der strömungsbegrenzenden Wand (12) und/oder zwischen einer unteren Hinterkante der Leitschaufel (10) und dem Innenring ein Hinterkantenspalt (16) ausgebildet ist, wobei die obere Hinterkante (14) und/oder die untere Hinterkante der Leitschaufel (10) mindestens eine Luftaustrittsöffnung (18) für einen Luftaustritt zur Ausbildung eines Luftvorhangs (20) zur zumindest teilweisen Abdichtung des Hinterkantenspalts (16) im Bereich der oberen Hinterkante (14) und/oder des Hinterkantenspalts (16) im Bereich der unteren Hinterkante aufweist,
**dadurch gekennzeichnet, dass**
die Luftaustrittsöffnung (18) über mindestens einen Kanal (22) mit mindestens einer Lufteintrittsöffhung (26) auf einer Schaufeloberfläche (24) eines Schaufelblatts (36) der Leitschaufel (10) luftleitend verbunden ist.

2. Leitschaufel nach Anspruch 1, **dadurch gekennzeichnet, dass** die Lufteintrittsöffnung (26) auf der Druckseite (D) der Leitschaufel (10) ausgebildet ist.

3. Leitschaufel nach Anspruch 1 oder 2, **dadurch gekennzeichnet, dass** im Bereich der Lufteintrittsöffnung (26) mindestens eine lokale Aufdickung des Schaufelblatts (36) der Leitschaufel (10) vor der Herstellung der Lufteintrittsöffnung (26) ausgebildet ist.

4. Leitschaufel nach einem der Ansprüche 1 bis 3, **dadurch gekennzeichnet, dass** im Bereich der Lufteintrittsöffhung (26) mindestens ein Luftleitblech am Schaufelblatt (36) angeordnet ist.

5. Leitschaufel nach einem der vorhergehenden Ansprüche, **dadurch gekennzeichnet, dass** die Luftaustrittsöffnung (18) trichter- oder spaltförmig ausgebildet ist.

6. Leitschaufelgitter einer Strömungsmaschine, insbesondere eines Verdichters oder einer Turbine eines Flugzeugtriebwerks, umfassend mindestens zwei Leitschaufeln (10) nach einem der vorhergehenden Ansprüche.

7. Verfahren zur Herstellung einer Leitschaufel (10) nach einem der Ansprüche 1 bis 5 oder eines Leitschaufelgitters nach Anspruch 6, **dadurch gekennzeichnet, dass** die Leitschaufel (10) oder das Leitschaufelgitter mittels eines generativen Herstellungsverfahrens hergestellt werden.

8. Verfahren nach Anspruch 7, **dadurch gekennzeichnet, dass** das generative Herstellungsverfahren ein selektives Laserschmelzverfahren oder ein selektives Lasersinterverfahren ist.

## Claims

1. A guide vane for a turbomachine, in particular for a compressor or a turbine of an aircraft engine, the guide vane (10) being axially pivotally coupled to a radially outwardly disposed flow-limiting wall (12) and being coupled to a radially inwardly disposed inner ring of the turbomachine, and a trailing edge gap (16) being formed between an upper trailing edge (14) of the guide vane (10) and the flow-limiting wall (12) and/or between a lower trailing edge of the guide vane (10) and the inner ring, the upper trailing edge (14) and/or the lower trailing edge of the guide vane (10) having at least one air outlet opening (18) for air to exit in order to form an air curtain (20) for sealing the trailing edge gap (16), at least in part, in the area of the upper trailing edge (14) and/or the trailing edge gap (16) in the area of the lower trailing edge, **characterized in that** the air outlet opening (18) communicates air-conductively, via at least one channel (22) with at least one air inlet opening (26) on a blade surface (24) of an airfoil (36) of the guide vane (10).

2. The guide vane according to claim 1, **characterized in that** the air inlet opening (26) is formed on the pressure side (D) of the guide vane (10).

3. The guide vane according to either claim 1 or claim 2, **characterized in that** at least one localized thickened portion of the airfoil (36) of the guide vane (10) is formed in the area of the air inlet opening (26) prior to the manufacture of the air inlet opening (26).

4. The guide vane according to any of claims 1 to 3, **characterized in that** at least one air baffle is arranged on the airfoil (36) in the area of the air inlet opening (26).

5. The guide vane according to any of the preceding claims, **characterized in that** the air outlet opening (18) is in the form of a funnel or a slit.

6. A guide vane cascade of a turbomachine, in particular of a compressor or a turbine of an aircraft engine, comprising at least two guide vanes (10) according to any of the preceding claims.

7. A method for producing a guide vane (10) according to any of claims 1 to 5 or a guide vane cascade according to claim 6, **characterized in that** the guide vane (10) or the guide vane cascade is produced by means of a generative production process.

8. The method according to claim 7, **characterized in that** the generative production process is a selective laser melting process or a selective laser sintering process.

## Revendications

1. Aube directrice pour une turbomachine, en particulier pour un compresseur ou une turbine d'un moteur d'aéronef, l'aube directrice (10) étant accouplée avec une paroi (12) limitant l'écoulement située radialement à l'extérieur et avec un anneau interne, situé radialement à l'intérieur, de la turbomachine, de manière à pouvoir pivoter axialement, une fente de bord de fuite (16) étant formée entre un bord de fuite supérieur (14) de l'aube directrice (10) et la paroi limitant l'écoulement (12) et/ou entre un bord de fuite inférieur de l'aube directrice (10) et l'anneau interne, le bord de fuite supérieur (14) et/ou le bord de fuite inférieur de l'aube directrice (10) comprenant au moins un orifice de sortie d'air (18) pour une sortie d'air dans le but de former un rideau d'air (20) pour étanchéifier au moins partiellement la fente de bord de fuite (16) dans la zone du bord de fuite supérieur (14) et/ou de la fente de bord de fuite (16) dans la zone du bord de fuite inférieur,
**caractérisée en ce que**
l'orifice de sortie d'air (18) est relié, via un canal, à au moins un orifice d'entrée d'air (26) sur une surface (24) d'un corps d'aube (36) de l'aube directrice (10) de manière à guider l'air.

2. Aube directrice selon la revendication 1, **caractérisée en ce que** l'orifice d'entrée d'air (26) est formé sur le côté de prise d'air (D) de l'aube directrice (10).

3. Aube directrice selon la revendication 1 ou 2, **caractérisée en ce qu'**au moins un épaississement local du corps d'aube (36) de l'aube directrice (10) est formé dans la zone de l'orifice d'entrée d'air (26) avant la réalisation de l'orifice d'entrée d'air (26).

4. Aube directrice selon l'une des revendications 1 à 3, **caractérisée en ce qu'**au moins une plaque de guidage de l'air est disposée sur le corps d'aube (36) dans la zone de l'orifice d'entrée d'air (26).

5. Aube directrice selon l'une des revendications précédentes, **caractérisée en ce que** l'orifice de sortie d'air (18) a la forme d'un entonnoir ou d'une fente

6. Grille d'aube directrice d'une turbomachine, en particulier d'un compresseur ou d'une turbine d'un moteur d'aéronef, comprenant au moins deux aubes directrices (10) selon l'une des revendications précédentes.

7. Procédé de fabrication d'une aube directrice (10) selon l'une des revendications 1 à 5 ou d'une grille d'aube directrice selon la revendication 6, **caractérisé en ce que** l'aube directrice (10) ou la grille d'aube directrice est fabriquée au moyen d'un procédé de fabrication génératif.

8. Procédé selon la revendication 7, **caractérisé en ce que** le procédé de fabrication génératif est un procédé de fusion sélective par laser ou de frittage sélectif par laser.
